Europäisches Patentamt

European Patent Office

Office européen des brevets

(11) Veröffentlichungsnummer: **0 241 669**
**A1**

(12) **EUROPÄISCHE PATENTANMELDUNG**

(21) Anmeldenummer: **87102149.9**

(22) Anmeldetag: **16.02.87**

(51) Int. Cl.⁴: **G02B 6/42**

(30) Priorität: **12.03.86 DE 3608246**

(43) Veröffentlichungstag der Anmeldung:
**21.10.87 Patentblatt 87/43**

(84) Benannte Vertragsstaaten:
**CH DE FR GB IT LI**

(71) Anmelder: **Siemens Aktiengesellschaft Berlin und München**
**Wittelsbacherplatz 2**
**D-8000 München 2(DE)**

(72) Erfinder: **Haltenorth, Helmut, Dr. Phys.**
**Werner-Friedmann-Bogen 18**
**D-8000 München 50(DE)**

(54) **Verfahren zum Befestigen und Justieren eines Endabschnittes einer Glasfaser.**

(57) Verfahren zum Befestigen und Justieren eines Glasfaser-Endabschnittes(1) - z.B. einer Monomode-glasfaser - im Inneren eines Schutzgehäuses in der optisch aktiven Richtung eines optoelektronischen Baukörpers(3) - z.B. eines GaAs-Lasers(3) - präzise auf die optisch aktive Stelle (4) dieses Baukörpers, wobei

-in einem ersten Schritt der Endabschnitt(1) innerhalb des Schutzgehäuses an einem Haltekörper(2) so befestigt - z.B. so geklebt oder so gelötet - wird, daß die Achse des Endabschnittes(1) in der aktiven Richtung, vom Haltekörper(2) gehalten, vorläufig mehr oder weniger auf die aktive Stelle(4) ausgerichtet ist, und

-danach in einem zweiten Schritt der Endabschnitt-(1) durch Verformen des Haltekörpers(2) präzise auf die aktive Stelle(4) hin justiert wird,

und wobei, um eine hochpräzise Justierung zu erreichen,

-noch vor dem zweiten Schritt - also z.B. während des ersten Schrittes oder noch vor dem ersten Schritt - der Haltekörper (2), der(2) durch einen massiven Sockel (2) aus duktilem Material - z.B. aus duktilem Metall, also z.B. aus Kupfer, Lötzinn oder Indiumlot - gebildet wird, in gedrungener, sehr steifer Bauweise - z.B. auf einem gemeinsamen Metallblock(5) - mit seinem Fuß (10) mit weniger als 5 mm Abstand vom Baukörper(3) mit dem Baukörper(3) mechanisch verbunden wird, und

-im zweiten Schritt der Sockel(2) durch Quetschen verformt wird.

**FIG 1**

## Verfahren zum Befestigen und Justieren eines Endabschnittes einer Glasfaser

Die Erfindung geht von dem im Oberbegriff des Patentanspruchs 1 definierten speziellen Verfahren aus, das für sich durch
* DE-A1 34 05 838
vorbekannt ist. Ein sehr ähnliches Verfahren ist bereits durch
* DE-A1 34 31 775
vorbekannt, wobei dort aber nicht der Haltekörper, sondern ein duktiles Zwischenteil ( BS in DE-A1 34 05 838; 9 in DE-A1 34 31 775 ) verformt wird, um die endgültige präzise Justierung zu erreichen. Bei den beiden vorbekannten Verfahren handelt es sich aber um - überdies reichlich kompliziert gestaltete - Befestigungsanordnungen, die nach der endgültigen Justierung noch ziemlich empfindlich auf Temperaturschwankungen reagieren, wodurch immer wieder von Zeit zu Zeit mehr oder weniger starke Dejustierungen auftreten, die erhebliche Betriebsstörungen bewirken können.

Besonders wenn der Baukörper nicht nur eine Photodiode, sondern z.B. ein Halbleiterlaser ist, muß hierbei im allgemeinen die Präzision der Justierung des Abstandes der Spitze des Endabschnittes ("Taper") von der aktiven Stelle des Baukörpers weitaus geringer sein als die Präzision der Justierung senkrecht dazu, also als die Präzision der Justierung senkrecht zur Achsenrichtung des Endabschnittes. Z.B. soll die Spitze des Endabschnittes senkrecht zur Achsenrichtung bei einer Monomode-Glasfaser oft auf ± 0,1 μm genau eingestellt werden, wobei jedoch die Befestigung des Endabschnittes, z.B. die Einlötung oder die Verklebung, sich beim Aushärten meistens wieder viel zu stark verzieht und damit die vor dem Aushärten der Befestigung erreichte Justierung wieder zerstört. Hierauf wird auch z.B. in den Schriften
* E-A2 155 528 = US-Ser.No. 704 332/22.Febr.1985 = VPA 84 P 1141, und
* E-A2 137 485 = US-Ser.No.659 892/11.Okt.1984 = VPA 83 P 1838 eingegangen.

Ähnliche Verfahren bzw. Anwendungen sind durch weitere Veröffentlichungen bekannt, vgl. z.B.
* GB-A 2 146 841,
* US 4 456 334,
* US 4 296 998,
* US 42 17 559,
* US 4 065 203,
* US 3 826 998,
* JP-A 57-100 781 = vol. 6, No. 189 (E-133) (1067) Sept. 28, 1982, sowie
* CA-A 1 108 900.

Die Aufgabe der Erfindung,
* die Justierung der Endabschnittspitze senkrecht zur Achsenrichtung der befestigten Glasfaser hochpräzise, z.B. auf 0,1 μm genau weitgehend temperaturunabhängig sicherzustellen und
* überdies diese Justierung mit ganz besonders wenig Aufwand zu erreichen
wird durch die im Patentanspruch 1 genannten Maßnahmen gelöst.

Die in den Unteransprüchen genannten zusätzlichen Maßnahmen gestatten, zusätzliche Vorteile zu erreichen, nämlich z.B. die Maßnahmen gemäß Patentanspruch

2, ein Anheben und/oder ein seitliches Verschieben der Achsenrichtung, bezogen auf den Fuß des Sockels, während des zweiten Schrittes,

3, vor allem ein seitliches Verschieben, aber mitunter auch ein mehr oder weniger starkes Anheben der Achsenrichtung, bezogen auf den Fuß des Sockels, während des zweiten Schrittes,

4, vor allem ein Anheben der Achsenrichtung, bezogen auf den Fuß des Sockels, während des zweiten Schrittes,

5, eine Verminderung des nach dem ersten Schritt aufgetretenen Verziehens der vorläufigen Justierung der Achsenrichtung, also der während des ersten Schrittes vor dem Aushärten der Befestigung erreichbaren vorläufigen Justierung,

6, eine äußerst einfache Herstellung auch des Sockels selber, sowie während des ersten Schrittes, z.B. mittels eines Mikromanipulators, eine sehr präzise Einstellung der vorläufigen Justierung der Achsenrichtung wegen des dann noch flüssigen Zustandes des Sockelmaterials,

7, ein Absenken der Achsenrichtung, bezogen auf den Fuß des Sockels, während des zweiten Schrittes,

8, ein seitliches Verschieben der Achsenrichtung unter weitgehender Vermeidung eines gleichzeitigen Anhebens oder Absenkens der Achsenrichtung, während des zweiten Schrittes,

9, eine besonders genaue Justierung auch bei - besonders aus Lötmetall hergestellten - recht unterschiedlich ausfallenden Sockelformen während des zweiten Schrittes, sowie

10, einen Schutz vor Korrosion und anderen Umwelteinflüssen, eine gewisse mechanische Stabilisierung des duktilen Haltekörpers, und damit oft auch die Vermeidung einer durch solche Einflüsse mit der Zeit, oft erst nach Jahren, auftretenden Dejustierung.

Die Erfindung, ihre Weiterbildungen und deren Vorteile werden mit Hilfe der beiden Figuren weiter erläutert, welche ein spezielles Ausführungsbeispiel in zwei zueinander senkrechten Schnitten zeigen.

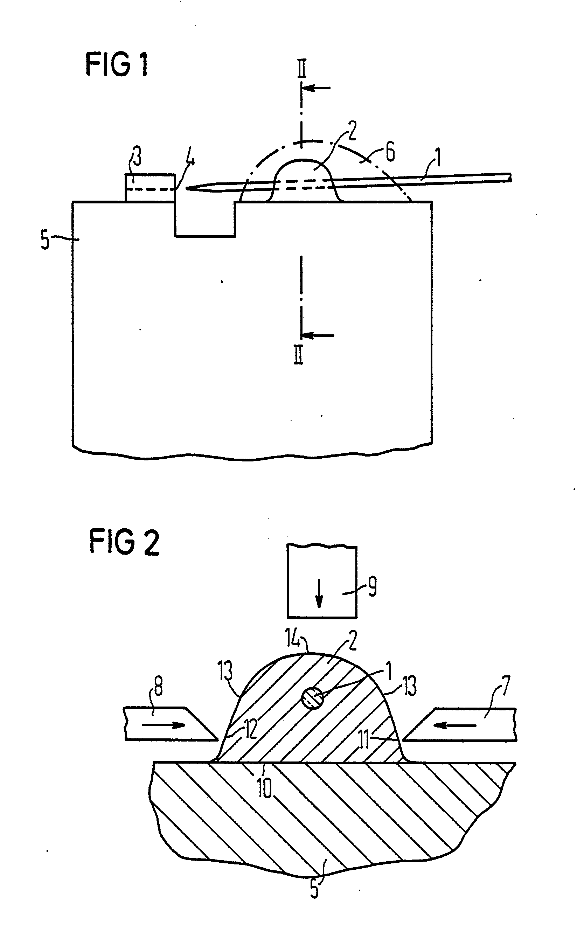

Das in den Figuren gezeigte Beispiel betrifft ein Detail im Inneren eines speziellen Moduls für ein Glasfaser-Kommunikationssystem. Im - für sich nicht gezeigten - Schutzgehäuse dieses Moduls ist mittels des erfindungsgemäßen Verfahrens ein Glasfaser-Endabschnitt 1, z.B. ein Monomodeglasfaser-Endabschnitt 1, in der optisch aktiven Richtung eines optoelektronischen Baukörpers 3, z.B. eines GaAs-Lasers 3, auf dem für sich - z.B. mittels eines ihn berührenden, nicht gezeigten Kaltleiters - temperaturstabilisierten Metallblock 5 angebracht. Der Endabschnitt 1 ist präzise auf die optisch aktive Stelle 4 dieses Baukörpers 3 justiert. Hierbei kann, vgl. die Fig. 1, auf der Blockoberfläche 5 ein Graben angebracht sein, der bei Massenfertigung das präzise Positionieren des Baukörpers 3 erleichtern kann.

In einem ersten Schritt wurde der Endabschnitt 1 innerhalb des Schutzgehäuses an einem Haltekörper 2 so angelötet, daß die Achse des Endabschnittes 1 in der aktiven Richtung, vom Haltekörper 2 gehalten, während der Lötung vorläufig mehr oder weniger auf die aktive Stelle 4 ausgerichtet war. Hierbei war der Haltekörper 2 ein massiver Sockel 2, der selber aus duktilem Material, nämlich aus dem Lötzinn selber auf dem Metallblock 5 bestand. Der Sockel 2 hatte daher einen sehr gedrungenen, steifen Aufbau, wobei er auf dem gemeinsamen Metallblock 5 - über seinen Fuß 10 mit z.B. 2 mm Abstand vom Laser 3 - mit dem Laser 3 mechanisch sehr starr verbunden war. Danach wurde in einem zweiten Schritt der Endabschnitt 1 durch Kaltverformen des ausgehärteten Lötzinntröpfchen 2, nämlich durch Quetschen, präzise auf die aktive Stelle 4 hin justiert.

Bei der Erfindung wurde also der Haltekörper 2, also das Lötzinntröpfchen 2 selber, und nicht irgendein duktiles Zwischenteil verformt, um die endgültige präzise Justierung zu erreichen. Die erfindungsgemäß hergestellte gezeigte Anordnung reagiert daher nach ihrer endgültigen Justierung ziemlich unempfindlich auf Temperaturschwankungen, wodurch bei ihr kaum noch temperaturbedingte Dejustierungen des Endabschnittes 1 auftreten.

Hierbei kann bei der Erfindung die Präzision der Justierung der Spitze des Endabschnittes 1 senkrecht zur Achsenrichtung des Endabschnittes 1 durch das Quetschen z.B. auf ± 0,1 μm genau eingehalten sein, wobei sowohl die Herstellung des Sockels 2 als auch das Quetschen ganz besonders wenig Aufwand erfordert, also besonders gut für eine Massenfertigung solcher Module geeignet ist.

Bei der Erfindung kann man überdies ganz besonders leicht die Achsenrichtung ganz beliebig nach oben, nach unten und zur Seite, also nach links und nach rechts justieren: Man kann diesen duktilen Sockel 2 z.B. durch Quetschen an den Verformungsstellen 11 und/oder 12 zwischen dem Endabschnitt 1 und dem Fuß 10 verformen, wodurch die Achsenrichtung entweder seitlich, bezogen auf Fig. 2, und/oder nach oben, also in Richtung zur Stelle 14 hin, gedrückt wird. Wenn man hierbei den Sockel 2 einseitig z.B. nur bei der Verformungsstelle 12 quetscht, wird die Achsenrichtung je nach Lage der Verformungsstelle mehr seitlich, also z.B. in Richtung zur Stelle 11 hin, oder mehr nach oben, also zur Stelle 14 hin gedrückt. Wenn man hingegen den Sockel 2 beidseitig, also z.B. an den Stellen 11 und 12, gleichzeitig z.B. mittels der Schneiden 7/8 einer Zange quetscht, wird die Achseinrichtung im wesentlichen nach oben, also vom Fuß 10 weg zur Stelle 14 hin gedrückt.

Das zwischen dem ersten und dem zweiten Schritt auftretende Verziehen der beim ersten Schritt eingestellten vorläufigen Justierung ist - schwächer, wenn der Sockel 2 den Endabschnitt 1 völlig umfaßt, wie in den Figuren gezeigt ist. Dann muß also beim zweiten Schritt der Sockel 2 weniger stark verformt werden.

Die Achsenrichtung ist auch beliebig nach unten, also in Richtung zum Fuß 10 hin, drückbar, wenn man den Sockel 2 auf seiner dem Fuß 10 abgewandten Seite 14 verformt, also oben mittels eines Stempels 9 quetscht.

Ein weitgehend rein seitliches Verdrücken der Achsenrichtung nach links oder rechts erreicht man, wenn man den Sockel 2 seitlich, vgl. die Stelle 13, neben der Glasfaser 1 an einer mehr oder weniger senkrecht zum Fuß 10 gerichteten Außenfläche 13 des Sockels 2 quetscht.

Besonders präzise wird die endgültige Justierung, wenn man den Sockel 2 mehrfach nacheinander iterativ quetscht, also nach Bedarf z.B. iterativ in beliebiger Reihenfolge an den Stellen 11, 12, 13 und/oder 14, bis die Justierung schließlich optimal ist, was durch Messung der jeweils erreichten optischen Kopplung zwischen dem Baukörper 3 und der Glasfaser 1 meßbar ist.

Man kann schließlich den endgültig verformten Sockel 2 mit einer aushärtenden Schutzschicht 6 umhüllen, um den Sockel 2 und damit die Justierung gegen chemische Umgebungseinflüsse zu - schützen und um ihn mechanisch zu stabilisieren.

## Ansprüche

1. Verfahren zum Befestigen und Justieren eines Glasfaser-Endabschnittes(1)

   -z.B. eines Monomodeglasfaser-Endabschnittes-(1) -

   im Inneren eines Schutzgehäuses in der optisch aktiven Richtung eines optoelektronischen Baukörpers(3)

-z.B. eines GaAs-Lasers(3) -
präzise auf die optisch aktive Stelle(4) dieses Baukörpers, wobei
-in einem ersten Schritt der Endabschnitt(1) innerhalb des Schutzgehäuses an einem Haltekörper(2) so befestigt

-z.B. so geklebt oder so gelötet -
wird, daß die Achse des Endabschnittes(1) in der aktiven Richtung, vom Haltekörper(2) gehalten, vorläufig mehr oder weniger auf die aktive Stelle-(4) ausgerichtet ist, und
-danach in einem zweiten Schritt der Endabschnitt-(1) durch Verformen des Haltekörpers(2) präzise auf die aktive Stelle(4) hin justiert wird,

-z.B. für die Herstellung der zwischen der Glasfaser (1) und der Elektronik(3) eines optoelektronischen Vermittlungssystemes anzubringenden Module -
**dadurch gekennzeichnet,** daß
-noch vor dem zweiten Schritt

-also z.B. während des ersten Schrittes oder noch vor dem ersten Schritt -
der Haltekörper(2), der(2) durch einen massiven Sockel(2) aus duktilem Material

-z.B. aus duktilem Metall, also z.B. aus Kupfer, Lötzinn oder Indiumlot -
gebildet wird, in gedrungener, sehr steifer Bauweise -z.B. auf einem gemeinsamen Metallblock(5) -
mit seinem Fuß(10) mit weniger als 5 mm Abstand vom Baukörper (3) mit dem Baukörper(3) mechanisch verbunden wird, und
-im zweiten Schritt der Sockel(2) durch Quetschen verformt wird.

2. Verfahren nach Patentanspruch 1,
**dadurch gekennzeichnet,** daß
-der Sockel(2) durch Quetschen zwischen dem Endabschnitt(1) und dem Fuß(10) des Sockels(2) verformt wird.

3. Verfahren nach Patentanspruch 2
, **dadurch gekennzeichnet,** daß
-der Sockel(2) einseitig(12) gequetscht wird.

4. Verfahren nach Patentanspruch 2,
**dadurch gekennzeichnet,** daß
-der Sockel(2) beidseitig(11, 12) gequetscht wird.

5. Verfahren nach einem der vorhergehenden Patentansprüche,
**dadurch gekennzeichnet ,** daß
-ein den Endabschnitt(1) umfassender Sockel(2) verwendet wird.

6. Verfahren nach Patentanspruch 5,
**dadurch gekennzeichnet,** daß
-der Sockel(2) beim Ausrichten der Achse des Endabschnittes(1) mittels eines zunächst noch flüssigen, danach erstarrten Lötmetalls(2) hergestellt wird.

7. Verfahren nach einem der vorhergehenden Patentansprüche, bevorzugt nach den Patentansprüchen 5 und 6,
**dadurch gekennzeichnet,** daß
-der Sockel(2) durch Quetschen auf der seinem Fuß(10) abgewandten Seite(14) verformt wird.

8. Verfahren nach einem der vorhergehenden Patentansprüche,
**dadurch gekennzeichnet,** daß
-der Sockel(2) durch Quetschen seitlich(13) neben der Glasfaser (1) an einer mehr oder weniger senkrecht zum Fuß(10) gerichteten Außenfläche(13) des Sockels(2) verformt wird.

9. Verfahren nach einem der vorhergehenden Patentansprüche,
**dadurch gekennzeichnet,** daß
-der Sockel(2) mehrfach nacheinander iterativ verformt wird.

10. Verfahren nach einem der vorhergehenden Patentansprüche,
**dadurch gekennzeichnet,** daß
-schließlich der verformte Sockel(2) mit einer aushärtenden Schutzschicht(6) umhüllt wird.

11. Optoelektronisches Modul eines Glasfaser-Kommunikationssystemes, mit dem Baukörper(3), dem Sockel(2) und einem Endabschnitt der Glasfaser(1) in einem Schutzgehäuse,
**hergestellt** nach einem Verfahren, das mindestens einem der vorhergehenden Patentansprüche entspricht.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 430 762 (HITACHI) <br> * Ansprüche 1,5; Seiten 13,17,18; Figuren * | 1 | G 02 B 6/42 |
| A,D | US-A-4 296 998 (W.H. DUEFT) <br> * Spalte 3 * | 1 | |
| A | EP-A-0 050 051 (THOMSON) <br> * Ansprüche * | 1 | |
| A | FR-A-2 386 919 (PHILIPS) <br> * Ansprüche 1,2 * | 1 | |
| A,D | US-A-3 826 998 (H. KINDL) <br> * Spalte 2, Zeilen 49-64 * | 1 | |
| A | EP-A-0 112 211 (THOMSON) <br> * Ansprüche * | 1 | RECHERCHIERTE SACHGEBIETE (Int. Cl.4) <br> G 02 B <br> H 01 S |
| A,D | DE-A-3 411 896 (SIEMENS) <br> * Ansprüche *. | 1 | |
| P,A D | DE-A-3 431 775 (SIEMENS) <br><br> * Ansprüche * | 1 | |
| A,D | DE-A-3 405 838 (SIEMENS) <br> * Zusammenfassung * | 1 | |

--- -/-

Der vorliegende Recherchenbericht wurde für alle Patentansprüche erstellt.

| Recherchenort <br> DEN HAAG | Abschlußdatum der Recherche <br> 09-07-1987 | Prüfer <br> PFAHLER R. |
|---|---|---|

Europäisches
Patentamt

**EUROPÄISCHER RECHERCHENBERICHT**

Nummer der Anmeldung

EP 87 10 2149

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | EP-A-0 137 485 (SIEMENS) <br> * Zusammenfassung * <br><br> ----- | 1 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 09-07-1987 | PFAHLER R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82